# EUROPÄISCHE PATENTSCHRIFT

(11) **EP 0 643 664 B1**
(45) Veröffentlichungstag und Bekanntmachung des Hinweises auf die Patenterteilung: **11.06.1997**
(21) Anmeldenummer: 93919268.8
(22) Anmeldetag: 04.09.1993
(51) Int. Cl.: B65D 85/57, B65D 27/00, G11B 23/03

(54) **VERPACKUNG FÜR EINE KOMPAKT-DISC AUS EINEM ZUSCHNITT FALTBAREN FLACHMATERIALS**
COMPACT DISK PACKAGE MADE FROM A FOLDABLE FLAT MATERIAL BLANK
EMBALLAGE POUR DISQUE COMPACT FORME A PARTIR D'UNE PIECE DECOUPEE DE MATERIAU PLAT PLIABLE

(30) Priorität: 07.04.1993 DE 9305332 U
(43) Veröffentlichungstag der Anmeldung: 22.03.1995
(73) Patentinhaber: Europa Carton Faltschachtel GmbH, 20095 Hamburg (DE)
(72) Erfinder: KLEINFELDER, Wilhelm, D-61191 Rosbach-Rodheim (DE)
(74) Vertreter: Siemons, Norbert, Dr.-Ing. Patentanwälte Hauck, Graalfs, Wehnert, Döring, Siemons
(86) Internationale Anmeldenummer: EP9302395
(87) Internationale Veröffentlichungsnummer: WO9422742

(56) Entgegenhaltungen:
- EP-A- 0 503 171
- FR-A- 2 234 202
- GB-A- 2 147 262
- SE-B- 401 961
- Derwent's abstract, Nr. 88-27461/04, Woche 8804; & SU,A,1316922, (VOLD), 1987-06-15

## Beschreibung

Gegenstand der Erfindung ist eine Verpackung für eine Kompakt-Disc (CD) aus einem Zuschnitt faltbaren Flachmaterials nach dem Oberbegriff des Anspruches 1. Eine denartige Verpackung ist durch die GB-A-2 147 262 bekanntgeworden.

Zur Aufbewahrung von CD oder anderen optisch auslesbaren Informationsträgern hoher Speicherdichte sind Kassetten aus Kunststoff weitgehend üblich. Diese haben einen flachen kastenförmigen Bodenteil, der in einer Aufnahme eine Zapfenanordnung zum Halten der CD an einem Mittelloch aufweist. Das Bodenteil ist mittels eines Deckelteils verschließbar, das einenends an dieses angelenkt und anderenends mit diesem verrastbar ist. Diese Kassetten sind verhältnismäßig aufwendig. Zur Information des Abnehmers ist in den durchsichtigen Behälter ein bedrucktes Beiheft bzw. Beiblatt eingeschoben.

Ferner sind schon Behälter für CD bekannt geworden, die zumindest teilweise aus Karton bestehen. Das DE-GM 90 16 575.6 offenbart eine Schutzhülle für eine CD, die als Einschub aus Karton ausgebildet ist, der lediglich an einer Randkante offen ist. Durch die Randöffnung ist ein rechteckiges Halteteil aus Kunststoff einschiebbar, welches einseitig eine flächige Vertiefung zur Aufnahme einer CD hat. Die Vertiefung hat in der Mitte einen Zentrierdorn für das Aufnahmeloch der CD und zu den Ecken des Halteteils hin übergehende Vertiefungen als Fingereingriffe. Diese Aufbewahrungsvorrichtung ist ebenfalls verhältnismäßig aufwendig und wegen ihrer Mehrteiligkeit in der Handhabung unbequem.

Überdies ist schon eine Verpackung für eine CD bekannt geworden, die ein Halteteil vorstehender Art aufgeklebt auf eine Innenseite eines buchartigen Trägers aus Karton hat. Durch Aufklappen der Blätter des Buches kann die Aufnahme für das Einlegen bzw. Entnehmen einer CD freigelegt werden Die Seiten des Buches sind mit Informationen für den Benutzer bedruckt.

Außerdem sind schon umweltfreundliche Verpackungen für eine CD bekannt geworden, die ausschließlich aus Karton bestehen. Ähnlich einer Hülle für eine herkömmliche Audio-Schallplatte können diese als Kuvert mit einem Randschlitz für das Einschieben bzw. Herausziehen der CD ausgebildet sein. Ferner kann an eine Hüllenwand eine Nachbarwand angelenkt sein, die gegen die andere Hüllenwand klappbar ist. Bei dieser Verpackung ist das Einsetzen bzw. Entnehmen der CD verhältnismäßig umständlich und mit einer relativ hohen Beanspruchung verbunden. Nach dem Entfernen einer Folien-Umverpackung kann die CD unerwünschterweise herausrutschen. Außerdem bietet sie nur wenig Platz für ein Bedrucken mit zusätzlichen Informationen. Sie wird deshalb vor allem für kleinere CD (insbesondere 3,5 inch Single-CD) verwendet.

Davon ausgehend liegt der Erfindung die Aufgabe zugrunde, eine umweltfreundliche Verpackung für eine CD zur Verfügung zu stellen, die einen verhältnismäßig geringen Aufwand hat, das Einsetzen, sichere Halten bzw. Entnehmen der CD begünstigt und deren Beanspruchung mindert.

Die Lösung der Aufgabe ist im Anspruch 1 angegeben. Die Unteransprüche enthalten vorteilhafte Ausgestaltungen.

Eine erfindungsgemäße Verpackung besteht ausschließlich aus faltbarem Flachmaterial, vorzugsweise Karton. Sie kann aus einem einteiligen Zuschnitt mit verhältnismäßig geringem Aufwand hergestellt werden. Der Zuschnitt ist auf sämtlichen Seiten gut bedruckbar, so daß sich die Verpackung selbst besonders als Träger für Benutzerinformationen eignet.

Mindestens eine Wand der Verpackung weist Befestigungsmittel auf. Dafür werden Randlaschen an den beiden Längsseiten der Wand gegen deren Innenseite geklappt und mit dieser verbunden, vorzugsweise durch Kleben. An den anderen Längsseiten der Randlaschen sind Befestigungslaschen angelenkt, die bezüglich der Wand schwenkbar sind. Die Befestigunglaschen haben bis zu ihrer Anlenkungslinie an die Randlaschen reichende Randaufnahmen für Segmente einer CD. Sind die Befestigunglaschen in einer Befestigungsstellung aufeinander zu geklappt, überspannen sie eine über der Innenseite positionierte CD, so daß diese zwischen Randaufnahmen, Befestigungslaschen und Wand festgehalten wird. Bei geschlossener Verpackung werden die Befestigungslaschen von einer gegen sie geklappten Nachbarwand gegen die CD gedrückt gehalten. In dieser Konfiguration kann die CD von selbst nicht herausfallen.

Zum Öffnen der Verpackung wird die Nachbarwand wie der Umschlag eines Buches aufgeklappt. Dann kann die CD normalerweise noch nicht selbsttätig ihre Position verlassen, weil die Befestigungslaschen aufgrund von Eigenspannungen des Flachmaterials in eine Befestigungsstellung gedrückt werden. Erst wenn die Befestigungslaschen voneinander weg in eine Freigabestellung geklappt werden, geben sie die CD frei, so daß sie mit etwa senkrecht von der Befestigungsmittel aufweisenden Wand abgezogen werden kann. Dabei rutscht die CD praktisch nicht über ihre optisch wirksamen Flächen, so daß ihre Entnahme schonend erfolgt. Das Einsetzen in umgekehrter Abfolge ist ebenfalls mit einer vernachlässigbaren Beanspruchung des Tonträgers verbunden.

Eine erfindungsgemäße Verpackung ist somit aus nur einem Material mit nur verhältnismäßig geringem Aufwand herstellbar, hat günstige Handhabungseigenschaften und gewährleistet eine sichere Arretierung und schonende Behandlung der aufzunehmenden CD. Aufgrund ihrer guten Bedruckbarkeit können Produktinformationen in Form von Beilagen entfallen. Die Verpackung ist ähnlich wie ein Buch lagerbar und als dauerhaftes Behältnis für die CD geeignet.

Die Segmente einer gegen die Innenseite der Wand positionierten CD sind über den an der Innenwand befestigten Randlaschen angeordnet. Die CD ist deshalb zumindest eine Materialstärke von der Wandinnenseite beabstandet, wodurch ihr Ergreifen an ihren zwischen den Randlaschen erstreckten Umfangsabschnitten begünstigt ist. Zusätzlich kann die CD Auflageabschnitte der Randlaschen überdecken, die im Bereich der Randaufnahmen über die Anlenkungslinien der Befestigungslaschen hinausragen. Bevorzugt sind die Auflageabschnitte durch die Randaufnahmen erzeugende Ausstanzungen der Befestigungslaschen gebildet. Dabei können die Randaufnahmen etwa entsprechend den zu aufzunehmenden Segmenten einer CD ausgebildet sein, wobei die Sehnen der Segmente in die Anlenkungslinien der Befestigungslaschen fallen. In Freigabestellung liegen die Randaufnahmen gerade am Außenumfang der CD-Segmente an.

Das Greifen der CD von der Innenseite der Wand wird weiter erleichtert, wenn die Randlaschen Hochprägebereiche haben, die von ihrer gegen die Wand zu klappenden Seite weg gerichtet sind. Die Hochprägebereiche können um etwa eine Materialstärke erhaben sein, so daß der Gesamtabstand der CD von der Innenseite die doppelte Wandstärke aufweisen kann. Die Hochprägungen können in den Auflageabschnitten ausgebildet sein und in Anpassung an deren Kontur bzw. das aufliegende Segmente der CD oliv-förmig sein.

Damit die Befestigungslaschen flach auf der Oberseite der CD aufliegen, können sie parallel zu ihren Anlenkungslinien an die Randlaschen in einem Abstand von etwa einer CD-Wandstärke weitere Anlenkungslinien haben. Fingereingriffe an den freien Enden der Befestigungslasche erleichtern ein Klappen in Freigabestellung für CD-Entnahme.

Eine der Wand mit Befestigungsmitteln benachbarte Wand kann an einer Längsseite eine Innenwand angelenkt haben, die gegen deren Innenseite klappbar und mit ihr verbindbar ist. Die Innenwand bewirkt zum einen eine Versteifung der Nachbarwand. Sie kann aber auch zur Ausbildung einer Tasche in der Nachbarwand dienen, wofür diese an der anderen Längsseite eine Verbindungslasche angelenkt haben kann, die gegen deren Innenseite klappbar und mit der Innenwand verbindbar ist. Die Tasche kann ein für herkömmliche Kunststoff-Aufnahmeboxen übliches Begleitheft aufnehmen. Für dessen Entnahme kann die Innenwand an einer Querseite einen Fingereingriff haben.

Bei einer bevorzugten Ausgestaltung hat die Wand mit Befestigungsmitteln an einer Querseite eine benachbarte Wand mit einer Tasche und an der weiteren Querseite eine weitere benachbarte Wand, deren Innenwand ohne Taschenausbildung direkt mit ihrer Innenseite verbunden ist. Die weitere benachbarte Wand wird bevorzugt gegen die Befestigungslaschen geklappt und die benachbarte Wand mit der Tasche von außen gegen die weitere Wand.

Eine Doppel-CD-Verpackung hat zwei Wände mit Befestigungsmitteln. Dabei kann eine benachbarte Wand als Tasche für ein Begleitheft ausgebildet sein.

Bevorzugt haben die Anlenkungen benachbarter Wände zwei Anlenkungslinien, deren Abstand die Gesamtwandstärke zwischen den benachbarten Wänden anzuordnender Teile des Zuschnittes bzw. anzuordnender CD entspricht. Hierdurch wird ein flaches Zusammenlegen der Verpackung begünstigt. Zur Minderung von Eigenspannungen in den Anlenkungslinien sind diese bevorzugt als besonders breite Rillinien ausgebildet.

Zwischen gegeneinander zu klappenden Wänden der Verpackung kann ein Wiederverschluß ausgebildet sein. Dieser hat bei einer praktischen Ausgestaltung eine an einem Randbereich der äußeren Wand angelenkte Verriegelungslasche mit einer deren Anlenkungslinie unterbrechenden Verriegelungszunge und einen dieser zugeordneten Verriegelungsschlitz in der innen liegenden Wand. Dabei ist die Verriegelungszunge bei etwa senkrecht zur äußeren Wand geschwenkter Verriegelungslasche in den Verriegelungsschlitz einführbar. Die Zunge taucht in den Schlitz ein, wobei die Verriegelungslasche in ihre Ausgangsstellung parallel zur äußeren Wand geschwenkt und aufgrund von Eigenspannungen ihrer Anlenkungen gehalten wird.

Bevorzugt weisen die verbindbaren Abschnitte des Zuschnittes Klebestellungen auf.

Weitere Einzelheiten und Vorteile der Erfindung ergeben sich aus der nachfolgenden Beschreibung der zugehörigen Zeichnung, die einen flach ausgebreiteten Zuschnitt in der Draufsicht zeigt.

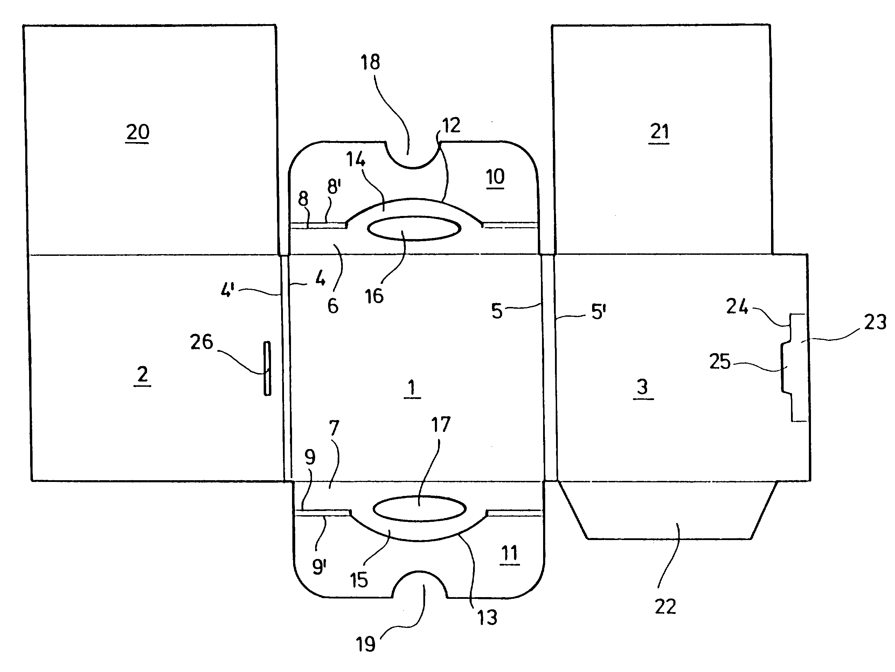

Der Zuschnitt gemäß Fig. 1 aus Karton hat drei Wände 1, 2, 3, die an Querseiten aneinandergelenkt sind. Dafür sind jeweils zwischen benachbarten Wänden 1 und 2 bzw. 1 und 3 zwei parallele Anlenkungslinien 4, 4' und 5, 5' vorgesehen, deren Abstände voneinander differieren.

Die mittlere Wand 1 ist mit Befestigungsmitteln ausgestattet. Dafür hat sie an beiden Längsseiten Randlaschen 6, 7 angelenkt. Deren Längsseiten sind wiederum jeweils über parallele Anlenkungslinien 8, 8' und 9, 9' mit Befestigungslaschen 10, 11 verbunden. Die Befestigungslaschen 10, 11 haben kreissegmentförmige Randaufnehmen 12, 13, die bis zu den Anlenkungslinien 8', 9' reichen. Von dort sind die Ausstanzungen 12, 13 senkrecht bis zu den Anlenkungslinien 8, 9 geführt.

Die Randaufnahmen bildenden Ausstanzungen 12, 13 grenzen zugleich Auflageabschnitte 14, 15 der Randlaschen 6, 7 ab, die über die Anlenkungslinien 8, 9 hinausragen. Die Randlaschen 6, 7 haben bis in die Auflageabschnitte 14, 15 erstreckte Hochprägungen 16, 17 mit Olivenkontur.

An den freien Enden der Befestigungslaschen 10, 11 sind mittig Fingereingriffe 18, 19 in Form halbkreisförmiger Ausstanzungen ausgebildet.

Die benachbarte Wand 2 hat an einer Längsseite eine Innenwand 20 angelenkt.

Die andere benachbarte Wand 3 hat an der einen Längsseite eine Innenwand 21 und an der anderen Längsseite eine Verbindungslasche 22 angelenkt. Die Längserstreckung von Innenwand 21 und Verbindungslasche 22 unterschreitet etwas die Längserstreckung der Wand 3. Im Überstandsbereich der Wand 3 ist in deren Randbereich eine Verriegelungslasche 23 über eine Anlenkungslinie 24 angelenkt. Die Anlenkungslinie 24 ist von einer Verriegelungszunge 25 unterbrochen, deren Quererstreckung etwa derjenigen eines Schlitzes 26 in der Wand 2 entspricht.

Dieser Zuschnitt wird wie folgt hergestellt und konfektioniert:

Zunächst wird ein Kartonbogen beidseitig mit den Informationen der herzustellenden CD-Verpackung bedruckt. Dann wird der Zuschnitt ausgestanzt, geprägt, gerillt und ggf. vorgebrochen. Der Zuschnitt wird in Stapeln flach liegend zum Anwender geliefert, d.h. zum CD-Herstellerwerk.

Beim Anwender wird der Zuschnitt für die Aufnahme einer CD vorbereitet. Hierfür werden in einem Arbeitsgang die Randlaschen 6, 7 gegen die Innenseite der Wand 1, die Innenwand 20 gegen die Innenseite der Wand 2 und der Verbindungsabschnitt 22 und die Innenwand 21 gegen die Innenseite der Wand 3 gefaltet. Die Randlaschen 6, 7 werden mit der Wand 1, die Innenwand 20 mit der Wand 2 und die Innenwand 21 mit der Verbindungslasche 22 verklebt. Zwischen der Innenwand 21 und der Wand 3 ist dann eine Tasche ausgebildet, in die eine Begleitinformation gesteckt werden kann.

Für das Einlegen einer CD wird die Befestigungslasche 10, 11 von der Innenseite der Wand 1 gegen die Randlaschen 6, 7 geklappt. Dann kann eine CD über der Innenseite der Wand 1 auf den Hochprägungen 16, 17 positioniert werden, wobei ihr Umfang genau zwischen die Stanzlinien 12, 13 paßt. Die aufliegende CD ist vollständig von der Wand 1 unterdeckt, d.h. hat randseitig nirgendwo einen Überstand. Anschließend werden die Befestigungslaschen 10, 11 losgelassen bzw. nach innen geklappt, so daß sie zwei einander gegenüberliegende Bereiche der CD überspannen und diese auf der Wand 1 sichern. Der Abstand zwischen der Anlenkungslinie 8, 8' bzw. 9, 9' begünstigt, daß die Befestigungslaschen 10, 11 flach auf der Oberseite der CD aufliegen.

Anschließend wird die durch die Innenwand 20 verstärkte Wand 2 gegen die Oberseite der Befestigungslaschen 10, 11 und die CD geklappt. Der Abstand zwischen den Anlenkungslinien 4, 4' begünstigt dabei, daß auf diese Wand parallel zur Wand 1 ausgerichtet werden kann. Schließlich wird die Wand 3 mit der Tasche an ihrer Innenseite gegen die Oberseite der Wand 2 gefaltet. Dabei wird die Verriegelungslasche 23 um ihre Anlenkungslinie 24 senkrecht zur Wand 3 geschwenkt, so daß ihre Verriegelungszunge in den Schlitz 26 einführbar ist. Mit fortschreitender Annäherung der Wand 3 an die Wand 2 kehrt die an ihrer Zunge 25 im Schlitz 21 geführte Verriegelungslasche 23 in ihre ursprüngliche Ausrichtung gemäß Zeichnung zurück, in der sie aufgrund Eigenspannung ihrer Anlenkungslinie 24 gehalten wird. Dann kann sich die geschlossene Verpackung praktisch nicht öffnen.

Das Öffnen der Verpackung geschieht in umgekehrter Reihenfolge. Zunächst wird also die Verriegelungslasche 23 senkrecht aufgestellt und werden die Wände 3, 2 von der Wand 1 weg geklappt. Anschließend werden die Befestigungslaschen 10, 11 voneinander weg geklappt und kann die CD behinderungsfrei nach oben entnommen werden.

## Patentansprüche

1. Verpackung für eine CD aus faltbarem Flachmaterial mit mindestens zwei an Querseiten an einander angelenkten Wänden (1, 2, 3), wobei mindestens eine Wand (1) Befestigungsmittel (10, 11) zum Befestigen einer CD an einer Innenseite hat, gegen die eine benachbarte Wand (2) klappbar ist, dadurch gekennzeichnet, daß die die Befestigungsmittel aufweisende Wand (1) an einander gegenüberliegenden Längsseiten angelenkte und gegen ihre Innenseite geklappte und damit verbundene Randlaschen (6, 7) aufweist und die Befestigungsmittel an die einander zugewandten Längsseiten der Randlaschen angelenkte Befestigungslaschen (10, 11) haben, die bis zu ihrer Anlenkungslinie (8, 9) an die Randlaschen reichende Randaufnahmen (12, 13) für auf den Randlaschen (6, 7) angeordnete Segmente einer über der Innenseite positionierten CD aufweisen, wobei die Befestigungslaschen (10, 11) in einer aufeinander zu geklappten Befestigungsstellung die CD überspannen und in einer voneinander weg geklappten Freigabestellung freigeben.

2. Verpackung nach Anspruch 1, dadurch gekennzeichnet, daß die Randlaschen (6, 7) im Bereich der Randaufnahmen (12, 13) über die Anlenkungslinien (8, 9) der Befestigungslaschen (10, 11) hinausragende Auflageabschnitte (14, 15) haben.

3. Verpackung nach Anspruch 2, dadurch gekennzeichnet, daß die Auflageabschnitte (14, 15) zu den Randaufnahmen (12, 13) komplementäre Ausstanzungen der Befestigungslaschen (10, 11) sind.

4. Verpackung nach einem der Ansprüche 1 bis 3, dadurch gekennzeichnet, daß die Randaufnahmen (12, 13) etwa entsprechend den aufzunehmenden Segmenten einer CD ausgebildet sind, wobei die Sehnen der Segmente in Anlenkungslinien (8', 9') der Befestigungslaschen (10, 11) fallen.

5. Verpackung nach einem der Ansprüche 1 bis 4, dadurch gekennzeichnet, daß die Randlaschen (6, 7) Hochprägebereiche (16, 17) haben, die von ihrer gegen die Wand (1) geklappten Seite weg gerichtet sind.

6. Verpackung nach Anspruch 5, dadurch gekennzeichnet, daß die Hochprägungen (16, 17) eine olivenförmige Kontur haben.

7. Verpackung nach einem der Ansprüche 1 bis 6, dadurch gekennzeichnet, daß in den Befestigungslaschen (10, 11) parallel zu ihren Anlenkungslinien (8, 9) an die Randlaschen (6, 7) in einem Abstand von etwa CD-Wandstärke weitere Anlenkungslinien (8', 9') ausgebildet sind.

8. Verpackung nach einem der Ansprüche 1 bis 7, dadurch gekennzeichnet, daß die Befestigungslaschen (10, 11) an ihren freien Enden Fingereingriffe (18, 19) haben.

9. Verpackung nach einem der Ansprüche 1 bis 8, dadurch gekennzeichnet, daß eine benachbarte Wand (2, 3) an einer Längsseite eine Innenwand (20, 21) angelenkt hat, die gegen deren Innenseite geklappt und mit derselben Wand verbunden ist.

10. Verpackung nach Anspruch 9, dadurch gekennzeichnet, daß die benachbarte Wand (3) an der anderen Längsseite eine Verbindungslasche (22) angelenkt hat, die gegen deren Innenseite geklappt und unter Ausbildung einer Tasche mit der Innenwand (21) verbunden ist.

11. Verpackung nach Anspruch 10, dadurch gekennzeichnet, daß die Innenwand an einer Querseite einen Fingereingriff hat.

12. Verpackung nach einem der Ansprüche 9 bis 11, dadurch gekennzeichnet, daß eine benachbarte Wand (3) eine mit einer Verbindungslasche (22) verbundene Innenwand (21) und eine weitere benachbarte Wand (2) eine mit ihrer Innenseite verbundene Innenwand (20) hat.

13. Verpackung nach einem der Ansprüche 1 bis 12, dadurch gekennzeichnet, daß zwei Wände Befestigungsmittel (10, 11) haben.

14. Verpackung nach Anspruch 13, dadurch gekennzeichnet, daß eine benachbarte Wand (3) eine mit einer Verbindungslasche (22) verbundene Innenwand (21) und eine weitere benachbarte Wand Befestigungsmittel (10, 11) hat.

15. Verpackung nach einem der Ansprüche 1 bis 14, dadurch gekennzeichnet, daß die Anlenkung benachbarter Wände (1, 2 und 1, 3) zwei parallele Anlenkungslinien (4, 4' und 5, 5') hat, deren Abstand der Gesamtwandstärke zwischen den benachbarten Wänden anzuordnender Teile des Zuschnitts bzw. der CD entspricht.

16. Verpackung nach einem der Ansprüche 1 bis 15, dadurch gekennzeichnet, daß die Anlenkungslinien (4, 5, 8, 9) Rillinien sind.

17. Verpackung nach einem der Ansprüche 1 bis 16, dadurch gekennzeichnet, daß zwischen gegeneinander zu klappenden Wänden (2, 3) ein Wiederverschluß (23, 26) ausgebildet ist.

18. Verpackung nach Anspruch 17, dadurch gekennzeichnet, daß der Wiederverschluß eine im Randbereich der äußeren Wand (3) angelenkte Verriegelungslasche (23) mit einer deren Anlenkungslinie (24) unterbrechenden Verriegelungszunge (25) und einen der Verriegelungszunge zugeordneten Verriegelungsschlitz (26) der inneren Wand aufweist, wobei die äußere Wand von außen gegen die innere Wand zu klappen ist.

19. Verpackung nach einem der Ansprüche 1 bis 18, dadurch gekennzeichnet, daß Abschnitte eines Zuschsnitts des faltbaren Flachmaterials durch Klebestellen verbunden sind.

## Claims

1. A package for a CD of foldable flat material comprising at least two walls (1, 2, 3) hinged to one another at transverse sides, at least one wall (1) having fastening means (10, 11) for fastening a CD at an inner surface towards which an adjacent wall (2) is foldable, characterized in that said wall (1) including said fastening means comprises lateral flaps (6, 7) hinged to opposed longitudinal sides, said lateral flaps being folded towards the inner surface and connected thereto, and said fastening means include fastening flaps (10, 11) hinged to the longitudinal sides of said lateral flaps facing one another which fastening flaps, for segments of a CD positioned above the inner surface, said segments being provided on said lateral flaps (6, 7), comprise lateral accommodations (12, 13) extending up to their hinge line (8, 9) to said lateral flaps, said fastening flaps (10, 11) covering over the CD in a fastening position folded towards each other and releasing it in a releasing position folded away from each other.

2. The package according to claim 1, characterized in that in the area of said lateral accommodations (12, 13) said lateral flaps (6, 7) comprise supporting portions (14, 15) projecting from said hinge lines (8, 9) of said fastening flaps (10, 11).

3. The package according to claim 2, characterized in that said supporting portions (14, 15) are die-cutouts of said fastening flaps (10, 11) being complementary to said lateral accommodations (12, 13).

4. The package according to any of claims 1 to 3, characterized in that said lateral accommodations (12, 13) are approximately defined in accordance with the segments of a CD which segments are to be received, the chords of said segments coinciding with hinge lines (8', 9') of said fastening flaps (10, 11).

5. The package according to any of claims 1 to 4, characterized in that said lateral flaps (6, 7) include highly embossed portions (16, 17) which are directed away from the side folded towards said wall (1).

6. The package according to claim 5, characterized in that said highly embossed portions (16, 17) have an olive-shaped outline.

7. The package according to any of claims 1 to 6, characterized in that further hinge lines (8', 9') are defined within said fastening flaps (10, 11) parallel to their hinge lines (8, 9) to said lateral flaps (6, 7) spaced therefrom by an approximate CD wall thickness.

8. The package according to any of claims 1 to 7, characterized in that said fastening flaps (10, 11) include finger-gripping cutouts (18, 19) at their free ends.

9. The package according to any of the claims 1 to 8, characterized in that an inner wall (20, 21) is hinged to an adjacent wall (2, 3) at a longitudinal side thereof which inner wall is folded towards the inner surface of said adjacent wall and is connected to the same.

10. The package according to claim 9, characterized in that a connecting flap (22) is hinged to said adjacent wall (3) at the other longitudinal side thereof which connecting flap is folded towards the inner surface of said adjacent wall and is connected to said inner wall (21) under formation of a pocket.

11. The package according to claim 10, characterized in that said inner wall includes a finger-gripping cutout at a transverse side thereof.

12. The package according to any of claims 9 to 11, characterized in that an adjacent wall (3) comprises an inner wall (21) connected to a connecting flap (22) and a further adjacent wall (2) includes an inner wall (20) connected to the inner surface thereof.

13. The package according to any of claims 1 to 12, characterized in that two walls include fastening means (10, 11).

14. The package according to claim 13, characterized in that an adjacent wall (3) comprises an inner wall (21) connected to a connecting flap (22) and a further adjacent wall includes fastening means (10, 11).

15. The package according to any of claims 1 to 14, characterized in that the hinge of adjacent walls (1, 2 and 1, 3) has two parallel hinge lines (4, 4' and 5, 5'), the spacing of which corresponds to the total wall thickness of the portions of the blank or the CD which portions are to be arranged between said adjacent walls.

16. The package according to any of claims 1 to 15, characterized in that said hinge lines (4, 5, 8, 9) are scoring lines.

17. The package according to any of claims 1 to 16, characterized in that a refastener (23, 26) is defined between walls (2, 3) to be folded towards one another.

18. The package according to claim 17, characterized in that said refastener comprises a locking flap (23) hinged to the edge portion of said outer wall (3) which locking flap includes a locking tongue (25) interrupting the hinge line (24) of said locking flap, as well as a locking slot (26) of said inner wall which locking slot is associated to said locking tongue, said outer wall having to be folded towards said inner wall from outside.

19. The package according to any of claims 1 to 18, characterized in that portions of a blank of the foldable flat material are connected to one another by bonded joints.

## Revendications

1. Emballage de disque compact, désigné ci-après par "CD", en matériau plat pliable, comportant au moins deux parois (1, 2, 3) s'articulant l'une à l'autre par des côtés transversaux, au moins une paroi (1) présentant des moyens de fixation (10, 11) pour fixer un CD sur une face intérieure, contre laquelle l'une des parois voisines (2) peut être rabattue,
caractérisé en ce que
la paroi (1), présentant les moyens de fixation, comporte des languettes de bordure (6, 7) s'articulant sur ses cotés longitudinaux situés à l'opposé l'un de l'autre, languettes qui sont rabattues contre sa face intérieure et reliées à elle, et en ce que les moyens de fixation comportent des languettes de fixation (10, 11) articulées sur les côtés longitudinaux, tournés l'un vers l'autre, des languettes de bordure, ces languettes de fixation (10, 11) présentant des logements de bord (12, 13) s'étendant jusqu'à leur ligne d'articulation (8, 9) sur les languettes de bordure (6, 7), et destinés à des segments, disposés sur les languettes de bordure (6, 7), d'un CD positionné sur la face intérieure, de sorte que les languettes de fixation (10, 11), dans une position de fixation où elles sont rabattues en se refermant l'une sur l'autre, enferment le CD en le recouvrant, et, dans une position de libération où elles sont écartées l'une de l'autre en se rabattant, elles libèrent le CD.

2. Emballage suivant la revendication 1, caractérisé en ce que les languettes de bordure (6, 7), dans la zone des logements de bord (12, 13), présentent des zones d'appui (14, 15) dépassant au-delà des lignes d'articulation (8, 9) des languettes de fixation (10, 11).

3. Emballage suivant la revendication 2, caractérisé en ce que les zones d'appui (14, 15) sont des parties découpées par matriçage des languettes de fixation (10, 11), complémentaires des logements de bord (12, 13).

4. Emballage suivant l'une des revendications 1 à 3, caractérisé en ce que les logements de bord (12, 13) sont réalisés sensiblement de façon à correspondre aux segments d'un CD à recevoir, les cordes des segments coïncidant avec les lignes d'articulation (8', 9') des languettes de fixation (10, 11).

5. Emballage suivant l'une des revendications 1 à 4, caractérisé en ce que les languettes de bordure (6, 7) comportent des zones gaufrées en relief (16, 17), qui s'écartent de leur face rabattue contre la paroi (1).

6. Emballage suivant la revendication 5, caractérisé en ce que les parties gaufrées en relief (16, 17) ont un contour en forme d'olive.

7. Emballage suivant l'une des revendications 1 à 6, caractérisé en ce que, dans les languettes de fixation (10, 11), d'autres lignes d'articulation (8', 9') sont réalisées parallèlement aux lignes d'articulation (8, 9) des languettes de fixation (10, 11), sur les languettes de bordure (6, 7), à une distance correspondant sensiblement à l'épaisseur du CD.

8. Emballage suivant l'une des revendications 1 à 7, caractérisé en ce que les languettes de fixation (10, 11) présentent, à leurs extrémités libres, des prises (18, 19) pour les doigts.

9. Emballage suivant l'une des revendications 1 à 8, caractérisé en ce qu'une paroi voisine (2, 3), sur un côté longitudinal, présente une paroi intérieure (20, 21) articulée sur elle, qui est rabattue contre sa face intérieure et est reliée à cette même paroi.

10. Emballage suivant la revendication 9, caractérisé en ce que la paroi voisine (3) présente, sur l'autre côté longitudinal, une languette de liaison (22) qui est rabattue contre sa face intérieure et qui est reliée à la paroi intérieure (21) en formant une poche.

11. Emballage suivant la revendication 10, caractérisé en ce que la paroi intérieure présente, sur un côté transversal, une prise pour les doigts.

12. Emballage suivant l'une des revendications 9 à 11, caractérisé en ce qu'une paroi voisine (3) présente une paroi intérieure (21), reliée à une languette de liaison (22), et en ce qu'une autre paroi voisine (2) présente une paroi intérieure (20) reliée à sa face intérieure.

13. Emballage suivant l'une des revendications 9 à 11, caractérisé en ce que deux parois comportent des moyens de fixation (10, 11).

14. Emballage suivant la revendication 13, caractérisé en ce qu'une paroi voisine (3) comporte une paroi intérieure (21) reliée avec une languette de liaison (22) et en ce qu'une autre paroi voisine comporte des moyens de fixation (10, 11).

15. Emballage suivant l'une des revendications 1 à 14, caractérisé en ce que l'articulation de parois voisines (1, 2 et 1, 3) présente deux lignes d'articulation parallèles (4, 4' et 5, 5'), dont la distance correspond à l'épaisseur totale des parois, entre les parties respectives du flan découpé et du CD, à disposer contre les parois voisines.

16. Emballage suivant l'une des revendications 1 à 15, caractérisé en ce que les lignes d'articulation (4, 5, 8, 9) sont des lignes rainurées.

17. Emballage suivant l'une des revendications 1 à 16, caractérisé en ce qu'entre des parois à rabattre l'une contre l'autre, est réalisée une fermeture refermable (23, 26).

18. Emballage suivant la revendication 17, caractérisé en ce que la fermeture refermable présente une languette de verrouillage (23) articulée dans la zone de bord de la paroi extérieure (3), et comportant une languette de verrouillage (25) interrompant sa ligne d'articulation (24), et une fente de verrouillage (26), associée à la languette de verrouillage, de la paroi intérieure, la paroi extérieure étant à rabattre de l'extérieur contre la paroi intérieure.

19. Emballage suivant l'une des revendications 1 à 18, caractérisé en ce que des sections d'un flan découpé du matériau plat pliable sont raccordées par des zones collées.
